# EUROPÄISCHE PATENTANMELDUNG

(11) **EP 1 695 810 A2**
(43) Veröffentlichungstag der Anmeldung: **30.08.2006**
(21) Anmeldenummer: 06002506.1
(22) Anmeldetag: 07.02.2006
(51) Int. Cl.: B29C 47/12, B29C 47/88, B29D 23/18, B29C 49/00

(54) **Verfahren und Vorrichtung zur Herstellung eines Kunststoffstrukturrohres**

(30) Priorität: 24.02.2005 DE 102005008470
(71) Anmelder: FRÄNKISCHE ROHRWERKE GEBR. KIRCHNER GmbH & Co KG, D-97486 Königsberg (DE)
(72) Erfinder: Beck, Frank, 97486 Königsberg (DE); Böttcher, Horst, 97486 Königsberg (DE); Kehl, Franz-Josef, 97711 Thundorf (DE); Kehrlein, Herbert, 97437 Hassfurt-Prappach (DE); Thomé, Michael, 97486 Königsberg (DE)
(74) Vertreter: Schwabe - Sandmair - Marx

(57) **Zusammenfassung**

Die Erfindung betrifft ein Verfahren sowie eine Vorrichtung zur Herstellung eines Kunststoffstrukturrohres (30), wobei ein Kunststoffschlauch, der warmplastisch verformbar ist, mittels mindestens eines Extruders hergestellt wird, und einer aus Formbacken (10) aufgebauten Formstrecke (50) zugeführt wird, um in der Formstrecke eine Struktur in den Kunststoffschlauch einzuformen, wobei der strukturierte Kunststoffschlauch und damit das Kunststoffstrukturrohr im Bereich der Formstrecke mit einem Kühlmedium beaufschlagt wird, das auf den Außenumfang des Kunststoffstrukturrohres auftrifft, um dieses abzukühlen.

## Beschreibung

Die Erfindung betrifft ein Verfahren und eine Vorrichtung zur Herstellung eines Kunststoffstrukturrohres nach einem der unabhängigen Ansprüche 1 bzw. 6.

Bei einem solchen Verfahren wird zunächst mittels wenigstens eines Extruders ein Kunststoffmaterial über wenigstens eine Auslassdüse zu einem weichplastisch verformbaren Kunststoffschlauch geformt und der Kunststoffschlauch wird einem Korrugator zugeführt, der umlaufende Formbacken aufweist, die in einer Formstrecke zu einem Formkanal zusammengeführt werden. Der Kunststoffschlauch wird in dem Korrugator in dessen Formstrecke mit einer Struktur, insbesondere einer Wellungsstruktur, versehen und das fertige, abgekühlte Kunststoffstrukturrohr wird aus der Formstrecke des Korrugators entformt und aus dem Korrugator abgezogen. Eine entsprechende Vorrichtung gemäß dem Anspruch 6 weist zwei umlaufende Formbackenreihen auf, die im Verlauf einer Formstrecke einen Formkanal ausbilden, in dem eine Struktur, die in den Innenwandungen der Formbacken vorgesehen ist, in einen warmplastisch verformbaren Kunststoffschlauch eingebracht wird.

Im Stand der Technik ist eine große Anzahl von Verfahren zur Herstellung eines Kunststoffstrukturrohres und insbesondere eines Kunststoffwellrohres bekannt. Entsprechend sind auch eine große Anzahl von dazu einsetzbaren Korrugatoren bekannt.

Bei herkömmlichen Verfahren bzw. Vorrichtungen zur Herstellung eines Kunststoffstrukturrohres, bei dem prinzipiell ein Endlosrohr hergestellt wird, werden in einem oder mehreren Extrudern ein oder mehrere Kunststoffmaterialien erhitzt und plastifiziert. Insofern das Kunststoffmaterial ein Gemisch darstellt, kann es im Extruder auch gemischt werden. Das oder die Kunststoffmaterialien werden einer Extrusions- oder Koextrusionsdüse zugeführt, um einen warmplastisch verformbaren Kunststoffschlauch herzustellen. Dieser Kunststoffschlauch wird einem Korrugator zugeführt. Korrugatoren sind im Stand der Technik weithin bekannt und brauchen deshalb im Einzelnen hier nicht beschrieben werden. Es sei lediglich ausgeführt, dass ein Korrugator in der Regel aus zwei umlaufenden Reihen oder Ketten von Formbackenhälften besteht, die in einem Formbereich zu einem geschlossenen Formkanal zusammengeführt werden. Der warmplastisch verformbare Kunststoffschlauch wird dem Formkanal zugeführt, mittels Über- und/oder Unterdruck an die Wandungen der Formbacken des Formkanals zur Anlage gebracht, abgekühlt, so dass die Struktur in das Kunststoffmaterial des Kunststoffstrukturrohres eingefroren wird, und aus dem Korrugator entformt und abgezogen. Dies geschieht im Auslaufbereich des Formkanals des Korrugators.

Im Stand der Technik wird die in dem warmplastisch verformbaren Kunststoffmaterial des Kunststoffschlauches enthaltene Wärme über das Material der Formbacken, beispielsweise Messing oder Stahl, abgeführt. Um das Kunststoffmaterial des strukturierten Kunststoffstrukturrohres abzukühlen, um die Struktur einzufrieren, muss eine relativ große Wärmemenge abgeführt werden. Um diese Wärme abführen zu können, ist es erforderlich, das Rohr über eine gewisse Zeitspanne in Kontakt zu den Formbackenhälften zu halten, um die im Kunststoffmaterial des Rohres enthaltene Wärme aufzunehmen, so dass das Kunststoffmaterial wieder erstarrt. Dieses Erfordernis führt dazu, dass die Formbacken nur mit einer relativ geringen Geschwindigkeit fahren können, um über eine ausreichend lange Zeit Kontakt zu dem Kunststoffmaterial des Kunststoffstrukturrohres haben zu können, um dessen Wärme aufnehmen zu können. Nach dem ersten Abkühlen des Kunststoffmaterials des Kunststoffschlauchs bzw. des Kunststoffstrukturrohres wird jedoch in der Regel das Rohrmaterial schwinden oder schrumpfen, so dass ein Abstand zwischen der Wandung des Rohres und den Formbacken auftritt, der die Wärmeabgabe von dem Rohr an die Formbacken nochmals verlangsamt.

Darüber hinaus ist es auch erforderlich, um eine annehmbare Herstellungsgeschwindigkeit erreichen zu können, eine größere Formkanalstrecke zur Verfügung zu stellen, damit über diese Strecke hinweg die Wärme des Kunststoffstrukturrohres aufgenommen werden kann. Dabei gilt das Verhältnis, das je kürzer der Formkanal ist, desto langsamer die Herstellungsgeschwindigkeit des Korrugators sein muss, um eine ausreichende Wärmemenge abführen zu können. Wird die Transportgeschwindigkeit gesteigert, muss die Formkanallänge vergrößert werden.

Insbesondere auch bei Struktur- bzw. Wellrohren mit sehr großen Durchmessern stellt es einen Kostenfaktor dar, dass die Strukturrohre mit großem Durchmesser nur mit geringer Geschwindigkeit hergestellt werden können, um die große Wärmemenge, die in der großen Masse des Kunststoffmaterials des Rohres mit großem Durchmesser enthalten ist, abführen zu können. Zudem ist auch die Herstellungsgeschwindigkeit enorm langsam. Die Formbacken für Rohre mit großem Durchmesser sind zudem sehr kostenintensiv und es gibt hier auch die Bestrebung, die Kosten für eine Formstrecke dadurch zu verringern, dass Formbacken aus dem Formkanal entnommen werden, zum Anfang des Formkanals mit hoher Geschwindigkeit zurücktransportiert werden, um dort wieder mit einer langsamen Herstellungsgeschwindigkeit für das Kunststoffstrukturrohr in den Formkanal eingefügt zu werden.

Es ist die Aufgabe gemäß der vorliegenden Erfindung, die voranstehend erörterten Nachteile des Standes der Technik wenigstens teilweise zu reduzieren, insbesondere aber diesen Nachteilen abzuhelfen.

Diese .Aufgabe wird durch die in den Kennzeichen der unabhängigen Ansprüche aufgeführten Merkmale gelöst.

Die gemäß der Erfindung erzielbaren Vorteile beruhen darauf, dass im Bereich der Formstrecke und/oder des Formkanals ein Kühlmedium auf den Außenumfang des Kunststoffstrukturrohres, insbesondere Kunststoffwellrohres, gerichtet wird, um dieses abzukühlen.

D.h., es wird aktiv ein Kühlmedium zugeführt, das in Kontakt zu dem Außenumfang des Kunststoffstrukturrohres gebracht wird, um dessen Wärme aufnehmen zu können. Es kann beispielsweise ein Gas oder eine Flüssigkeit, etwa Wasser, zugeführt werden, um die Wärme des Kunststoffstrukturrohres aufzunehmen. Es kann die höhere Wärmemengenaufnahme des Kühlmediums ausgenutzt werden, die durch die Veränderung des Aggregatzustandes entsteht.

Natürlich kann mit der Erfindung auf ein glattwandiges Kunststoffrohr in einem Korrugator und ein mehrschichtiges Kunststoffrohr mit einer oder mehreren strukturierten und insbesondere gewellten Schichten oder auch mit einer oder mehreren glatten Schichten und einer oder mehreren strukturierten Schichten hergestellt werden. Dabei ist in Betracht zu ziehen, dass mit einem Korrugator auch ein Rohr mit einer glatten Wand, etwa auch einer glatten Innen- oder Außenschicht aus Kunststoff hergestellt werden kann.

Besonders vorteilhaft ist es, wenn das Kühlmedium zur Direktkühlung des Kunststoffstrukturrohres über einen Zwischenraum, Spalt oder durch Öffnungen im Formbacken z.B. Vakuumschlitze oder etwa durch den Materialschwund oder durch leichtes Öffnen des Formkanals entsteht, zwischen den aneinander anliegenden Formbacken entlang der Formkanallängsachse der Wandung des Kunststoffstrukturrohres an dessen Außenumfang zugeführt wird. Das Kühlmedium kann später natürlich wieder abgeführt werden, um nachrückendem bzw. kaltem Kühlmedium Platz zu machen, etwa durch den Materialschwund oder durch leichtes Öffnen des Formkanals oder durch Öffnungen im Formbacken z.B. Vakuumschlitze.

Dabei ist es zu bevorzugen, dass das Kühlmedium entfernt von einem Einlauf des Formkanals zugeführt und/oder abgeführt wird, um das Kühlmedium in einem Bereich zuzuführen, in dem bereits ein Zwischenraum etwa durch den Materialschwund oder durch leichtes Öffnen des Formkanals zwischen dem Kunststoffstrukturrohr und der Oberfläche des Formkanals aufgetreten ist.

Bei dem erfindungsgemäßen Verfahren wird folglich ausgenutzt, dass das Kunststoffmaterial schwindet, so dass ein Zwischenraum zwischen dem Kunststoffmaterial des Kunststoffstrukturrohres bzw. Kunststoffwellrohres und der Formbackenoberfläche entsteht, durch welchen das Kühlmedium hindurchgeführt werden kann, um dabei in einen Kontakt zu dem Außenumfang des Kunststoffstrukturrohres gelangen zu können, um Wärme mit hoher Effizienz abführen zu können. Tritt aufgrund eines Kunststoffmaterials, das keine Schwindung aufweist, kein Spalt zwischen dem Material der Wandung des Kunststoffstrukturrohres und der Oberfläche der Formbacken auf, kann das Kühlmedium über Leitungen eventuell mit Druck beaufschlagt zugeführt werden, um in Kontakt zu der Rohrwandung gebracht zu werden. In der Regel haben aber wenigstens die meisten Kunststoffmaterialien einen Schwund, so dass ein Abstand bzw. Zwischenraum zwischen der Oberfläche des Formkanals und der Außenoberfläche des Kunststoffstrukturrohres vorhanden ist, der für die Durchführung eines Kühlmediums herangezogen werden kann.

Ferner ist es möglich, nach einem ersten Erstarren des Kunststoffmaterials in einem geschlossenen Formkanalabschnitt die Formbacken wieder einen Spalt weit aufzufahren, um über den Spalt einen definierten Abstand zwischen der Oberfläche der Formbacken und dem Außenumfang des Kunststoffstrukturrohres herzustellen, durch den das Kühlmedium zugeführt bzw. um den Außenumfang des Kunststoffstrukturrohres geführt oder gespült werden kann. Auch eine Überlagerung beider Möglichkeiten, d.h., einerseits der Ausnutzung des Schwundphänomens und der Öffnung der Formbacken im Verlauf des Formkanals, kann zum Einsatz gelangen.

Die erfindungsgemäße Kunststoffstrukturierungsvorrichtung, die insbesondere als Korrugator ausgebildet ist, erfasst erfindungsgemäß im Bereich des Formkanals wenigstens eine Zuführeinrichtung, um ein Kühlmedium auf den Außenumfang des Kunststoffstrukturrohres, insbesondere des Kunststoffwellrohres, zu lenken, um das Kunststoffstrukturrohr abzukühlen. Diese Zuführeinrichtung kann das Kühlmedium beispielsweise mit einem Überdruck zuführen. Insofern kann es sich dabei um eine Pumpe oder gar Hochdruckpumpe handeln, die beispielsweise an den Spalt zwischen den Formbackenhälften mittels einer oder mehrerer entsprechender Düsen angeschlossen werden kann. Andererseits kann das Kühlmedium auch angesaugt werden, indem beispielsweise eine entsprechende Pumpe einen Unterdruck erzeugt, durch den das Kühlmedium angesaugt und um den Außenumfang des Kunststoffstrukturrohres geleitet wird. Auch die Schwerkraft oder eine freie bzw. eine erzwungene Konvektion kann herangezogen werden, um Kühlmedien in Kontakt zum Außenumfang des Kunststoffstrukturrohres zu bringen. Letztlich wird auch eine Kombination der genannten Effekte die gewünschte schnelle Abkühlung des Kunststoffstrukturrohres bewerkstelligen können. Allerdings wird es zu bevorzugen sein, das Kühlmedium entweder mit Überdruck oder mit Unterdruck oder einer Kombination der beiden Druckkonstellationen um den Außenfang des Kunststoffstrukturrohres herumzuleiten.

Dementsprechend kann gemäß einer Ausführungsform im Bereich des Formkanals der erfindungsgemäßen Kunststoffstrukturierungsvorrichtung wenigstens eine Abführeinrichtung vorgesehen sein, um erwärmtes Kühlmedium vom Außenumfang des Kunststoffstrukturrohres abzuziehen.

Insofern die Zuführung des Kühlmediums durch einen Unterdruck erfolgt, wobei auf der Abführseite für das Kühlmedium ein Unterdruck erzeugt wird, ist natürlich die den Unterdruck erzeugende Einrichtung auch als Zuführeinrichtung für das Kühlmedium anzusehen.

Insofern die Zuführung des Kühlmediums und die Abführung des Kühlmediums über zusätzliche Leitungen in den Formbacken erfolgt, ist es erforderlich, dass im Verlaufe des Formkanals wenigstens eine Zuführleitung und wenigstens eine Abführleitung vorgesehen ist, um die gewünschte aktive Kühlung erzielen zu können. Natürlich ist es auch möglich, lediglich eine Zuführung über eine zusätzliche Leitung innerhalb eines der Formbacken innerhalb eines geschlossenen Formkanals zu bewerkstelligen, und die Abführung des Kühlmediums über den Auslauf für das Wellrohr zu bewerkstelligen.

Das Kühlmedium, das zugeführt wird, kann aus einem Gas oder einer Mischung von Gasen bestehen, aus einer Flüssigkeit oder einer Emulsion bestehen, oder einen Nebel oder einen Schaum umfassen. Die gemäß der Erfindung erzielbaren Vorteile, die durch das Fördern eines Kühlmediums durch einen Spalt zwischen dem Kunststoffstrukturrohr und der vom Kanaloberfläche zu erzielen sind, umfassen, dass durch die Erfindung eine unmittelbare Kühlung ermöglicht wird, die ein Abkühlen des Rohres innerhalb sehr kurzer Zeit ermöglicht. Ferner ist es ein Vorteil, dass andere Kühlmaßnahmen für die Formbacken entfallen können. Derzeit sind aufwendige Kühlmaßnahmen für Formbacken im Stand der Technik im Gebrauch. Ferner kann durch die sehr schnelle Abkühlung des Kunststoffmaterials das Kunststoffmaterial in einem noch relativ amorphen Zustand abgekühlt werden, was die mechanische Festigkeit des Kunststoffmaterials verbessert. Da die Abkühlung zunächst in einer Außenschicht der Wand des Kunststoffstrukturrohres erfolgt, und diese Außenschicht dann eine hohe mechanische Stabilität hat, kann sehr schnell auf die stützende Wirkung der Formbacken verzichtet werden, so dass der Formkanal weiter verkürzt werden kann und die weitere Abkühlung etwa in einem zum Korrugator externen Kühlbad erfolgen kann. Jedenfalls lässt sich die Anzahl der Formbacken und damit die Länge des Formkanals verringern, wobei gleichzeitig die Produktionsgeschwindigkeit erheblich gesteigert werden kann. Dies ist insbesondere bei Wellrohren bzw. Kunststoffstrukturrohren mit großem Durchmesser und damit mit hoher Kunststoffwanddicke von Vorteil.

Durch eine Steuerung des Abkühlprozesses lässt sich auch die Schwindung des Kunststoffmaterials und letztlich damit auch die Form und die Maßhaltigkeit des hergestellten Kunststoffstrukturrohres steuern. Außerdem kann die Zufuhr des Kühlmediums in den Zwischenraum auch bei der Entformung des Kunststoffstrukturrohres aus dem Formkanal bzw. den Formbacken behilflich sein. Dementsprechend lassen sich auch komplexere Strukturen, etwa mit Hinterschneidungen leichter mit dem erfiridungsgemäßen Verfahren bzw. der erfindungsgemäßen Vorrichtung mit entsprechend ausgebildeten Formbackenstrukturen hergestellt.

Nachfolgend wird die vorliegende Erfindung anhand bevorzugter Ausführungsformen unter Bezugnahme auf die beigefügten Figuren näher erörtert, wobei weitere Merkmale, Vorzüge und Zielsetzungen der Erfindung offenbart werden. In den Darstellungen zeigen:

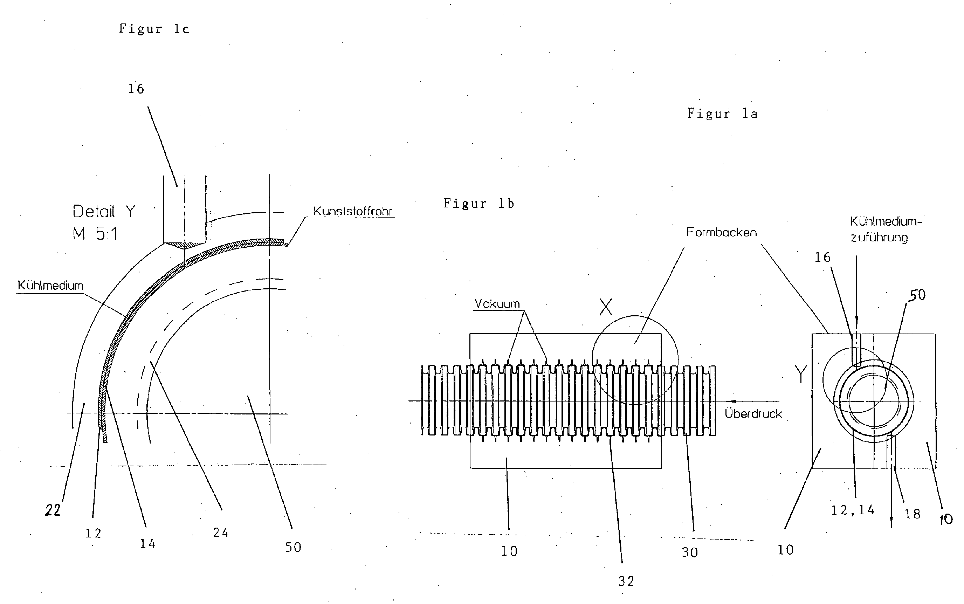

- Fig. 1 a bis 1c: eine erste Ausführungsform gemäß der Erfindung, wobei Fig. 1a Formbacken eines erfindungsgemäßen Korrugators in einer querschnittlichen Darstellung wiedergibt, Fig. 1b einen Abschnitt eines Wellrohres sowie einen Formbacken in einer Seitenansicht im Verlauf des Herstellungsprozesses zeigt und Fig. 1c ein Detail Y gemäß Fig. 1a wiedergibt;

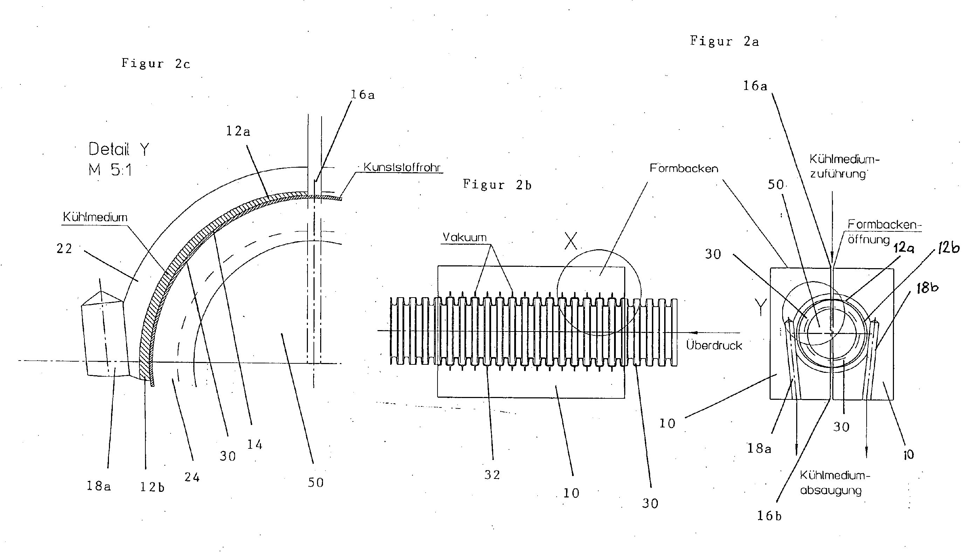

- Fig. 2a bis 2c: eine weitere Ausführungsform gemäß der Erfindung darstellen, wobei Fig. 2a einen Formkanal in einer Querschnittsdarstellung zeigt, Fig. 2b ein hergestelltes Wellrohr mit einem zugeordneten Formbacken in einer Seitenansicht wiedergibt und Fig. 2c ein Detail Y gemäß Fig. 2a zeigt; und

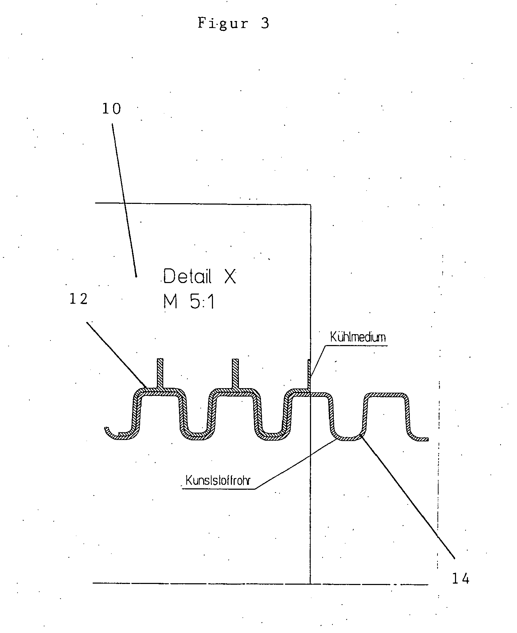

- Fig. 3: ein Detail X gemäß den Fig. 1 bund 2b.

In den Figuren sind gleiche oder wenigstens funktionsgleiche Bestandteile mit gleichen oder entsprechenden Bezugszeichen benannt.

Die Fig. 1a lässt zwei Formbacken 10 erkennen, die zu einem Formkanal so zusammen gefügt sind. In den Formkanal ist ein Wellrohr eingeführt, das aus einem Kunststoffmaterial besteht. Die Trennlinie in Axialrichtung des Formkanals ist geschlossen. Ein Spalt ist nicht vorhanden. Um ein Kühlmedium zuführen zu können, ist in dem linken Formbacken 10 eine Kühlmediumzuführung 16 vorgesehen und, um das Kühlmedium abzuführen, ist in der rechten Formbacke 10 eine Kühlmediumabführung 18 vorgesehen. Erkennbar sind beide Leitungen 16 und 18 an dem Formkanal angeschlossen, so dass ein Kühlmedium zu- und abgeführt werden kann. Ein Kunststoffrohr und der diesen umgebende Ringraum sind durch die Bezugszeichen 12, 14 schematisch angeordnet. Das Kühlmedium wird folglich über die Kühlmediumzuführung 16 in einen freien Ringraum bzw. Zwischenraum zwischen der Wand 14 des Kunststoffrohres und der Innenoberfläche des Formbackens 10 hindurchgeleitet und dabei in einen strömenden Kontakt zu der heißen Wand des Kunststoffrohres gebracht, um dieses in kürzester Zeit abzukühlen.

Da zu Beginn der Formung des Kunststoffrohres der Kunststoff mit einem vorgegebenen Durchmesser in den geschlossenen Formkanal, der durch die Formbacken 10 gebildet ist, eingefügt ist, ist zu Beginn der Formstrecke des Formkanals der Formkanal durch den noch nicht geschwundenen Kunststoff voll ausgefüllt, so dass das Kühlmedium in der Regel in der Richtung eines Einlaufs des Formkanals nicht entweichen kann. Ein Entweichen ist lediglich in Richtung der Abführung 18 für das Kühlmedium vorhanden und ggf. auch noch in Richtung eines Auslaufs des Formkanals, wo das Kunststoffwellrohr aus den Formbacken 10 entformt wird.

In der Fig. 1b ist zu erkennen, wie ein Wellrohr in den Strukturen eines Formbacken 17 zu liegen kommt. Ein Wellrohr 30 wird mittels eines Überdrucks aufgeblasen, wobei der noch warmplastisch verformbare Kunststoff des Wellrohres in das Wellenprofil der Formbacken gedrückt wird. In der Darstellung gemäß Fig. 1c ist angedeutet, dass auch ein Vakuum über Abpump- bzw. Saugkanäle 22 erzeugt werden kann, um den Kunststoff des Wellrohres in die Wellungsstrukturen des Formbackens zu ziehen. Das gleiche Vakuum, das über Kanäle 32 erzeugt wird, kann auch verwendet werden, um ein Kühlmedium um die Wandung 14 des Rohres 30 herumzufördern, um das Rohr abzukühlen.

Wie bereits angedeutet, kann das Rohr bzw. kann das Kunststoffstrukturrohr 30 mit einem Überdruckverfahren geformt werden, es kann aber auch ein reines Vakuumverfahren verwendet werden, wobei durch einen Unterdruck zwischen der Wandung des Rohres und der Innenoberfläche des Formbackens bzw. des Formkanals der Kunststoff der Rohres in die Struktur, insbesondere Wellungsstruktur, des Formbackens 10 bzw. des Formkanals hineingezogen wird. Es ist auch möglich, eine Kombination von Über- und Unterdruck für die Ausformung zu verwenden.

In der Fig. 1c ist ein Detail Y gemäß Fig. 1a dargestellt. Zu erkennen ist, wie die Kühlmediumzuführung 16 an den Formkanal 22, 24 angeschlossen ist. In dem dargestellten Schnitt kontaktiert die Wandung 14 des Wellrohres 30 die Innenfläche des Formbackens entfernt von den maximalen bzw. minimalen Abmessungen der Wellungsstruktur. Die Wand 14 des Kunststoffwellrohres ist in der Darstellung bereits geschrumpft, so dass ein Zwischenraum 12 zwischen der Außenoberfläche der Wand 14 und der zugeordneten Innenoberfläche des Formbackens vorhanden ist. Dieser Zwischenraum 12 ist mit Kühlmedium gefüllt, das die Wandung des Kunststoffrohes entlang fließt, um das Kunststoffmaterial abzukühlen.

Die Fig. 3 zeigt das Detail X gemäß Fig. 1b und gemäß Fig. 2b, die nachfolgend noch erörtert wird. In der Fig. 3 ist zu erkennen, wie das Kühlmedium entlang eines insbesondere durch Schrumpfung des Kunststoffmaterials des Kunststoffrohres entstandenen Zwischenraum befördert wird. Der Zwischenraum bzw. das Kühlmedium 12 fließt erkennbar über die Außenoberfläche des Rohres, und zwar insbesondere nachdem das Rohr bereits in seiner äußersten Schicht der Wand 14 abgekühlt und geschrumpft ist. Die äußere Schicht der Wand 14 ist soweit abgekühlt, dass keine negativen Einflüsse mehr entstehen, dadurch kann das Kühlmedium die Oberfläche des Kunststoffrohres nicht mehr beeinflussen, sondern dem Kunststoffmaterial lediglich Wärme entziehen.

In der Fig. 2a ist eine andere Ausführungsform gemäß der Erfindung wiedergegeben. Bei dieser Ausführungsform sind die Formbacken 10, die den Formkanal 50 bilden, in einer Richtung senkrecht zur Mittelachse des Formkanals 50 erstreckten Richtung voneinander beabstandet, so dass sich ein Spalt 16a ergibt, über den ein Kühlmedium zugeführt werden kann. Diese Spalt kann sich dadurch ergeben, dass zwar zu Beginn des Formkanals die Formbacken 10 fest zusammengeführt werden, so dass kein Spalt 16a vorhanden ist, aber nach der ersten Grundabkühlung des Rohres die Formbacken 10 wieder um eine geringe Strecke auseinander bewegt werden, um den Spalt 16a bereitzustellen. Das Kühlmedium kann über den Spalt 16a aber auch über den Spalt 16b zugeführt werden. Wird das Kühlmedium über den Spalt 16a zugeführt, kann auch eine Abführung des Kühlmediums über die Kühlmediumabführung 18a erfolgen. Wie zu erkennen ist, ist der Zwischenraum 12a, 12b zwischen der Wand des Wellrohres 30 und der Innenoberfläche des Formkanals 50 nicht exakt kreisförmig, obwohl das Wellrohr selbst eine kreisförmigen Querschnitt hat, der durch die Ausformung der Wellungen bzw. der Form des Rohres 30 im Einlaufbereich des Formkanals 50 erfolgt ist, so dass sich ein leicht C- bzw. halbmondförmiger Halbquerschnitt des Zwischenraums 12a, 12b ergibt. Durch diesen kann das Kühlmedium, das über den Spalt 16a zugeführt wird, in Richtung der Abführleitungen 18a befördert werden, wobei, um auch eine Kühlung von unten durchzuführen, auch über den Spalt 16b das Kühlmedium zugeführt werden kann. Bei dieser Ausgestaltung lässt sich erkennbar eine größere Wärmemenge abführen, da das Kühlmedium, das sowohl über den Spalt 16a als auch über den Spalt 16b zugeführt wird, lediglich einen Viertelumfang des Rohres 30 zu umspülen hat, um dann über die Kühlmediumabführungsleitungen 18a, 18b abgeführt zu werden.

Die Fig. 2b lässt prinzipiell die gleichen Merkmale erkennen, wie die Fig. 1b, so dass sich eine weitere Beschreibung erübrigt, was auch für den Ausschnitt X gemäß Fig. 2b gilt, dessen Einzelheiten aus Fig. 3 ergeben.

Die Fig. 2c lässt das Detail Y erkennen. Der Spalt 16a, über den das Kühlmedium zugeführt wird, geht in einen noch schmalen, aber sich erweiternden Zwischenraum 12a über, der an seiner breitesten Stelle zu einem Zwischenraum 12b wird. An der breitesten Stelle 12b des Zwischenraums ist die Abführleitung 18a angeschlossen. Bis auf die Führung des Kühlmediums und den Spalt 16a stimmt auch diese Ausführungsform im Wesentlichen mit der Ausführungsform gemäß den Fig. 1a bis 1c überein.

In Bezug auf das erfindungsgemäß herzustellende Kunststoffrohr ist festzuhalten, dass diese in einem Korrugator auch als glattwandiges Kunststoffrohr oder als mehrschichtiges Kunststoffrohr mit wenigstens einer glatten Schicht und/oder mit wenigstens einer strukturierten Schicht hergestellt werden kann.

## Patentansprüche

1. Verfahren zur Herstellung eines Kunststoffrohres oder eines Kunststoffstrukturrohres (30), insbesondere eines Kunststoffwellrohres, mit den folgenden Schritten:
- mit wenigstens einem Extruder wird ein Kunststoffmaterial über wenigstens eine Auslassdüse zu einem weichplastisch verformbaren Kunststoffschlauch ausgebildet;
- der Kunststoffschlauch wird einer Kunststoffstrukturierungsvorrichtung, insbesondere einem Korrugator, zugeführt, der umlaufende Formbacken (10) aufweist, die in einer Formstrecke zu einem Formkanal (50) zusammengeführt werden;
- der Kunststoffschlauch, wird in der Kunststoffstrukturierungsvorrichtung, insbesondere in dem Korrugator, in der Formstrecke (50) geformt, insbesondere mit einer Struktur oder Wellungsstruktur, versehen;
- das Kunststoffrohr oder Kunststoffstrukturrohr (30) wird aus dem Formkanal (50) der Kunststoffstrukturierungsvorrichtung, insbesondere des Korrugators entfernt und aus dem Korrugator abgezogen,
**dadurch gekennzeichnet, dass** im Bereich der Formstrecke und/oder des Formkanals (50) ein Kühlmedium auf den Außenumfang des Kunststoffrohres oder Kunststoffstrukturrohres (30), insbesondere Kunststoffwellrohres, gerichtet wird, um dieses abzukühlen.

2. Verfahren nach Anspruch 1, wobei das Kühlmedium über einen Zwischenraum zwischen dem axial zum Formkanal (50) aneinander anliegenden Formbacken zugeführt wird.

3. Verfahren nach einem der Ansprüche 1 oder 2, wobei das Kühlmedium über einen Zwischenraum zwischen dem in Längsrichtung des Formkanals (50) aneinander anliegenden Formbacken (10) abgeführt wird.

4. Verfahren nach einem der voranstehenden Ansprüche, **dadurch gekennzeichnet, dass** das Kühlmedium von einem Einlauf des Formkanals (50) entfernt zugeführt und/oder abgeführt wird.

5. Verfahren nach einem der voranstehenden Ansprüche, **dadurch gekennzeichnet, dass** das Kühlmedium über eine in wenigstens einem der Formbacken vorgesehene Leitung zu- und/oder abgeführt wird.

6. Kunststoffstrukturrichtungsvorrichtung mit mehreren Formbacken (10), die zur Bildung eines Formkanals (50) zur Strukturierung eines Kunststoffstrukturrohres, insbesondere eine Kunststoffwellrohres, zusammengeführt werden, insbesondere Korrugator, **dadurch gekennzeichnet, dass** im Bereich des Formkanals (50) wenigstens eine Zuführeinrichtung (16; 16a), insbesondere durch Auffahren der Formbacken, vorgesehen ist, um ein Kühlmedium auf den Außenumfang des Kunststoffstrukturrohres (30) zu lenken, um das Kunststoffrohr oder Kunststoffstrukturrohr, insbesondere Kunststoffwellrohr, zu kühlen.

7. Kunststoffstrukturrichtungsvorrichtung nach Anspruch 6, **dadurch gekennzeichnet, dass** im Bereich des Formkanals (30) wenigstens eine Abführeinrichtung (18a, 18b) vorgesehen ist, um erwärmtes Kühlmedium vom Außenumfang des Kunststoffstrukturrohres abzuziehen.

8. Kunststoffstrukturrichtungsvorrichtung nach einem der Ansprüche 6 oder 7, **dadurch gekennzeichnet, dass** im Bereich des Formkanals wenigstens ein Formbacken (10) mit einer Zuführleitung (16a, 16b) und/oder Abführleitung (18a, 18b) für das Kühlmedium vorgesehen ist.

9. Kunststoffstrukturrichtungsvorrichtung nach einem der Ansprüche 6 bis 8, **dadurch gekennzeichnet, dass** im Laufe des Formkanals (50) wenigstens ein Formbacken (10) mit einer Zuführleitung vorgesehen ist.

10. Kunststoffstrukturrichtungsvorrichtung nach einem der Ansprüche 6 bis 9, **dadurch gekennzeichnet, dass** im Laufe des Formkanals (50) wenigstens ein Formbacken (10) mit einer Abführleitung vorgesehen ist.
